# EUROPEAN PATENT APPLICATION

(11) **EP 2 965 804 A1**
(43) Date of publication of application: **13.01.2016**
(21) Application number: 15182705.2
(22) Date of filing: 28.08.2012
(51) Int. Cl.: B01F 3/06, B01F 9/00, B01F 9/06, B01J 8/10, B01J 8/08, B01J 8/16, B01J 19/28, B01J 8/00, B01J 2/12

(54) **POWDER STIRRING DEVICE**

(30) Priority: 02.09.2011 JP 2011192029; 24.10.2011 JP 2011233253
(62) Divisional of application: 12827390.1
(71) Applicant: Toyo Tanso Co., Ltd., Osaka-shi Osaka 555-0011 (JP)
(72) Inventor: HONGU, Makoto, Osaka-shi, Osaka 555-0011 (JP); MANABE, Nobutaka, Osaka-shi, Osaka 555-0011 (JP); TAKEBAYASHI, Hitoshi, Osaka-shi, Osaka 555-0011 (JP); TAKADA, Junji, Osaka-shi, Osaka 555-0011 (JP); TANAKA, Noriyuki, Osaka-shi, Osaka 555-0011 (JP)
(74) Representative: TBK

(57) **Abstract**

The invention pertains to a powder processing apparatus 100 that processes powder using a processing gas. It comprises
a powder transport path 60 that has a strip-shaped transporter that extends spirally in a vertical direction and on which the powder moves;
a powder supplier 3 for supplying the powder to the powder transport path;
a vibration applier 40 that vibrates the powder transport path to move the powder supplied to the powder transport path along the strip-shaped transporter;
a processing container 10 in which the powder supplied to the powder transport path is processed by the processing gas while moving;
a powder recoverer that recovers the processed powder; and
at least one height limitation member 64 that limits a height of the powder moving on the strip-shaped transporter.

## Description

### [Technical Field]

The present invention relates to a powder stirring device that stirs powder.

### [Background Art]

Conventionally, the process of powder is performed using a processing gas such as a fluorine gas. In order to increase the processing efficiency, the processing gas and the powder are required to be efficiently brought into contact with each other. In a manufacturing method of a fluorinated polymer described in Patent Document 1, a fluorination process of a powdered hydrogen-containing polymer is performed using a fluorine gas.

The above-mentioned fluorination process is performed in a reactor. The reactor includes a horizontal-type cylindrical body, a rotation shaft and a plurality of impellers. The rotation shaft is provided to be in parallel with a direction in which the cylindrical body extends, and to penetrate the inside of the cylindrical body. The plurality of impellers are attached to the rotation shaft at constant intervals inside of the cylindrical body. A fluorine gas supply port and a fluorine gas discharge port are provided at the horizontal-type cylindrical body.

During the fluorination process, the powder of the hydrogen-containing polymer is stored inside of the cylindrical body. In this state, the rotation shaft is rotated, so that the plurality of impellers are rotated. At this time, a fluorine gas is supplied from the fluorine gas supply port into the cylindrical body, and an inner atmosphere of the cylindrical body is discharged from the fluorine gas discharge port. Thus, the powder of the hydrogen-containing polymer is stirred by the plurality of impellers inside of the cylindrical body, and reacts with the fluorine gas supplied from the fluorine gas supply port.

In the processing method of a carbon nanostructure powder described in Patent Document 2, the process of the carbon nanostructure powder is performed using a fluorine gas, for example, as the processing gas (a reaction gas). In this case, a carrier gas is supplied into a reactor through a filter from a lower portion of the reactor, whereby a fluidization region in which the carrier gas flows upward is formed in the reactor. In that state, the processing gas is supplied into the reactor through the filter from the lower portion of the reactor. Thus, in the fluidization region, the carbon nanostructure powder and the processing gas can be brought into contact with each other.
[Patent Document 1] JP 9-309918 A
[Patent Document 2] JP 2005-1980 A

### [Summary of Invention]

### [Technical Problem]

In the reactor described in above-mentioned Patent Document 1, the powder stored inside of the cylindrical body is stirred by the plurality of impellers rotated inside of the cylindrical body. In this case, the powder inside of the cylindrical body that is present in a portion through which the plurality of impellers do not pass is not stirred. Therefore, the fluorination process cannot be evenly performed on the entire powder.

In the above-mentioned reactor, it is considered to increase the rotation speed of the plurality of impellers in order to stir the entire powder. However, a fluorine gas has a high reactivity. Therefore, in a case in which the powder is processed using such a processing gas, when the rotation speed of the plurality of impellers is increased, static electricity is generated due to friction, and a dust explosion is easy to occur. Therefore, it is difficult to increase the rotation speed of the plurality of impellers to a rotation speed at which the entire powder can be stirred.

Further, the inventors of the present application have discovered that, in the processing method of Patent Document 2, part of the carbon nanostructure powder adheres to the filter, and the carbon nanostructure powder that adheres to the filter and the processing gas excessively react with each other. Therefore, it is difficult to evenly process the entire carbon nanostructure powder in the above-mentioned processing method.

An object of the present invention is to provide a powder stirring device that can evenly process powder while ensuring safety.

### [Solution to Problem]

(1) According to one aspect of the present invention, a powder stirring device that processes powder using a reactive processing gas includes a reaction container that has a rotationally symmetric inner peripheral surface with respect to an axis in a substantially horizontal direction, is rotatablly provided around the axis, and is configured to be capable of storing the powder, a rotation driver that rotates the reaction container around the axis, a gas introduction system for introducing the processing gas into the reaction container rotated by the rotation driver, and a gas discharge system for discharging the processing gas in the reaction container rotated by the rotation driver.

In this powder stirring device, the processing gas is introduced into the reaction container from the gas introduction port with the powder being stored in the reaction container. In this state, the rotation driver rotates the reaction container around the axis in a substantially horizontal direction. Thus, the powder is processed by the processing gas. The processing gas in the reaction container that includes the processing gas is discharged from the gas discharge system.

In this case, the powder positioned at a lowest portion of the inner peripheral surface is lifted with the rotation of the reaction container due to the friction force generated between the inner peripheral surface and the powder. The powder in a surface layer of the lifted powder moves to slide to a lowest portion of the inner peripheral surface, and the remaining powder in a lower layer is further lifted. Thereafter, the reaction container is further rotated, whereby the friction force generated between the powder at the inner peripheral surface and the powder in the lower layer is smaller than gravity exerted on the powder. Thus, the lifted powder in the lower layer moves to slide to the lowest portion of the inner peripheral surface. As a result, the powder in the surface layer and the powder in the lower layer are switched.

Such operation is repeated, whereby the entire powder is evenly stirred in the rotating reaction container. Thus, it is possible to efficiently bring the reactive processing gas into contact with the surface of the powder without increasing the rotation speed of the reaction container. As a result, the powder can be efficiently and evenly processed while safety is ensured.

(2) The powder stirring device may further include a projection provided to project from the inner peripheral surface of the reaction container.

In this case, even if the friction force generated between the powder and the inner peripheral surface during the rotation of the reaction container is small, the powder is lifted to a certain height by the projection. Thus, lifting and dropping of the powder are repeatedly performed in the reaction container. As a result, the entire powder can be more evenly stirred.

(3) The projection may include a plurality of plate members that extend in parallel with the axis and are arranged toward a rotational center.

In this case, the entire powder can be more evenly stirred with a simple configuration and at a low cost.

(4) The gas discharge system may include a gas outlet pipe that is inserted into the reaction container from an outside of the reaction container and has a discharge port that opens upward inside of the reaction container.

In this case, the discharge port of the gas outlet pipe is opened upward, whereby the powder present at a lower portion in the reaction container is difficult to flow into the discharge port. As a result, the powder is inhibited from being discharged through the gas outlet pipe.

(5) Part of the gas outlet pipe may be provided to extend upward, the discharge port may be provided at an upper end of the part that extends upward, and the powder stirring device may further include a powder flow-in prevention member provided to cover surroundings of and a region above the discharge port of the gas outlet pipe.

In this case, a bent gas flow-in path is formed between part of the gas outlet pipe and the powder flow-in prevention member. Thus, even if the powder is scattered in the reaction container, the powder is difficult to flow into the discharge port of the gas outlet pipe. As a result, the powder is prevented from being discharged through the gas outlet pipe.

(6) The powder stirring device may further include a fixing member provided on the axis, wherein the reaction container may be provided to be rotatable relative to the fixing member, and the gas introduction system and the gas exhaust system may be provided to penetrate the fixing member.

In this case, the fixing member is not rotated during the rotation of the reaction container. Therefore, the configuration of the gas introduction system and the gas discharge system is not complicated. As a result, the powder stirring device with a simple configuration and of low cost is realized.

### [Advantageous Effects of Invention]

The present invention enables the powder to be evenly processed while safety is ensured.

### [Brief Description of Drawings]

[FIG. 1] FIG. 1 is a schematic diagram showing the configuration of a powder processing apparatus according to one embodiment of the present invention.
[FIG. 2] FIG. 2 is a perspective view showing the configuration of a powder stirring device of Fig. 1.
[FIG. 3] FIG. 3 is a cross sectional view taken along the line A-A of the powder stirring device of Fig. 2.
[FIG. 4] FIG. 4 is a diagram schematically showing a vertical cross sectional view of the powder stirring device that extends along a rotation shaft of Fig. 2.
[FIG. 5] Fig. 5(a) is a front view of a pipe supporting mechanism of Fig. 2 and its peripheral members, and Fig. 5(b) is a vertical cross sectional view taken along the line B-B of the pipe supporting mechanism and its peripheral members of Fig. 5(a).
[FIG. 6] Fig. 6 is a side view showing the inner configuration of the powder processing apparatus according to the first reference configuration.
[FIG. 7] Fig. 7 is an enlarged cross sectional view of a portion A of an ascending transport path of Fig. 6.
[FIG. 8] Fig. 8 is a plan view showing one example in a portion B of the ascending transport path of Fig. 6.
[FIG. 9] Fig. 9 is an enlarged cross sectional view showing one example in the portion B of the ascending transport path of Fig. 6.
[FIG. 10] Fig. 10 is a cross sectional view showing a state in which the powder localizes in the ascending transport path.
[FIG. 11] Fig. 11 is a side view showing the inner configuration of the powder processing apparatus according to the second reference configuration.
[FIG. 12] Fig. 12 is a side view showing the inner configuration of the powder processing apparatus according to the third reference configuration.

### [Description of Embodiments]

### < A > Embodiments of Invention

A Powder stirring device according to one embodiment of the present invention will be described with reference to drawings.

### (1) Overall Configuration of Powder Processing Apparatus

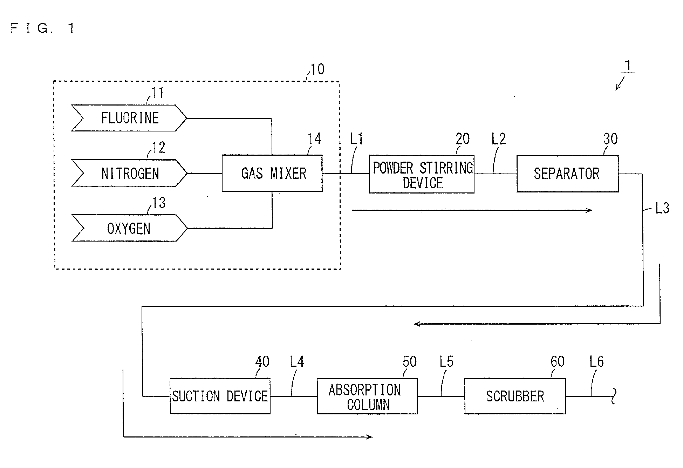

Fig. 1 is a schematic diagram showing the configuration of the powder processing apparatus according to one embodiment of the present invention. As shown in Fig. 1, the power processing apparatus 1 includes a processing gas generating device 10, a powder stirring device 20, a separator 30, a suction device 40, an absorption column 50 and a scrubber 60.

The processing gas generating device 10 includes a fluorine gas generating source 11, a nitrogen gas generating source 12, an oxygen gas generating source 13 and a gas mixer 14. The fluorine gas generating source 11, the nitrogen gas generating source 12 and the oxygen gas generating source 13 are respectively connected to the gas mixer 14 through pipes. A fluorine gas, a nitrogen gas and an oxygen gas are supplied at respective predetermined flow rates from the fluorine gas generating source 11, the nitrogen gas generating source 12 and the oxygen gas generating source 13 to the gas mixer 14. The gas mixer 14 produces a processing gas used for the process of powder by mixing the supplied fluorine gas, the nitrogen gas and the oxygen gas.

In the present embodiment, the powder is an organic compound or an inorganic compound that can be processed by a gas. For example, the powder is resin powder, ceramic powder or metal powder. More specifically, the powder is resin powder that is made of a polyester resin, a polyethylene resin or an acrylic resin, pigment or the like.

Further, in the present embodiment, the process preformed using the processing gas is a surface process that modifies the surface of the powder by bringing the processing gas into contact with the surface of the powder (hereinafter referred to as a powder process). In a case in which the processing gas made of a fluorine gas, an oxygen gas and a nitrogen gas is used, it is possible to apply hydrophilicity by introducing a hydrophilic group to a functional group of the surface of the powder. Further, in a case in which the processing gas made of a fluorine gas and a nitrogen gas is used, it is possible to apply water repellency by adding fluorine to the surface of the powder.

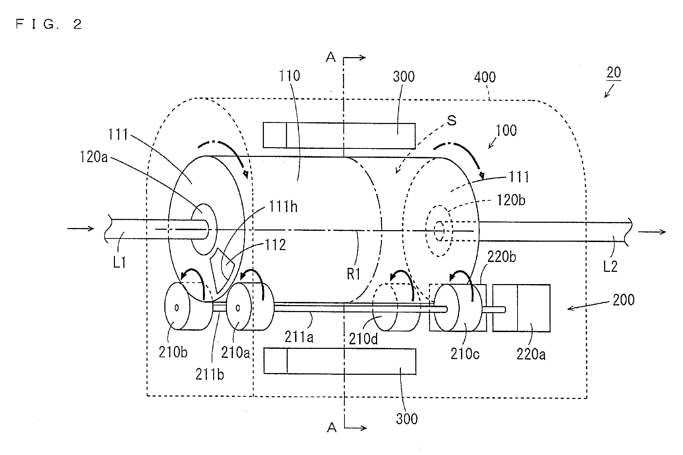

The powder stirring device 20 is connected to the gas mixer 14 of the processing gas generating device 10 through a pipe L1. The processing gas produced by the gas mixer 14 is supplied to the powder stirring device 20 through the pipe L1. In the powder stirring device 20, the powder is processed by the processing gas supplied from the gas mixer 14 in a below-mentioned reaction container 100 (Fig. 2). Details of the configuration of the powder stirring device 20 and the operation of the powder stirring device 20 during the powder process will be described below.

The separator 30 is connected to the powder stirring device 20 through a pipe L2. The below-mentioned suction device 40 is operated, whereby an atmosphere in the reaction container 100 (Fig. 2) of the powder stirring device 20 during the powder process is fed to the separator 30 through the pipe L2 as a discharge gas. In the separator 30, particles (the powder) fed from the powder stirring device 20 together with the discharge gas are removed.

The suction device 40 is connected to the separator 30 through a pipe L3. Further, the absorption column 50 is connected to the suction device 40 through a pipe L4. In the present example, the suction device 40 is a dry pump. As described above, the dry pump is operated, whereby the atmosphere in the reaction container 100 (Fig. 2) of the powder stirring device 20 is fed to the absorption column 50 through the pipe L2, the separator 30 and the pipes L3, L4 as the discharge gas.

The absorption column 50 is filled with soda lime as an absorbent, for example. The discharge gas fed from the pipe L4 includes highly corrosive F₂ (fluorine) and HF (hydrogen fluoride). The F₂ and HF are absorbed by the absorption column 50, and removed from the exhaust gas.

The scrubber 60 is connected to the absorption column 50 through a pipe L5. The discharge gas from which F₂ and HF are removed by the absorption column 50 is fed to the scrubber 60 through the pipe L5. The scrubber 60 collects particles of a solid or a liquid included in the discharge gas by aqueous droplets or a water film. The discharge gas from which the particles are removed is fed outside of the powder processing apparatus 1 through a pipe L6.

### (2) Configuration of Powder Stirring Device

Fig. 2 is a perspective view showing the configuration of the powder stirring device 20 of Fig. 1. As shown in Fig. 2, the powder stirring device 20 is mainly constituted by the reaction container 100, a rotation driving device 200, a heating/cooling device 300, and a heat-insulating cover 400.

The reaction container 100, the rotation driving device 200 and the heating/cooling device 300 are provided in the heat-insulating cover 400. In Fig. 2, the heat-insulating cover 400 is indicated by the dotted line, and each constituent element in the heat-insulating cover 400 is indicated by the solid line.

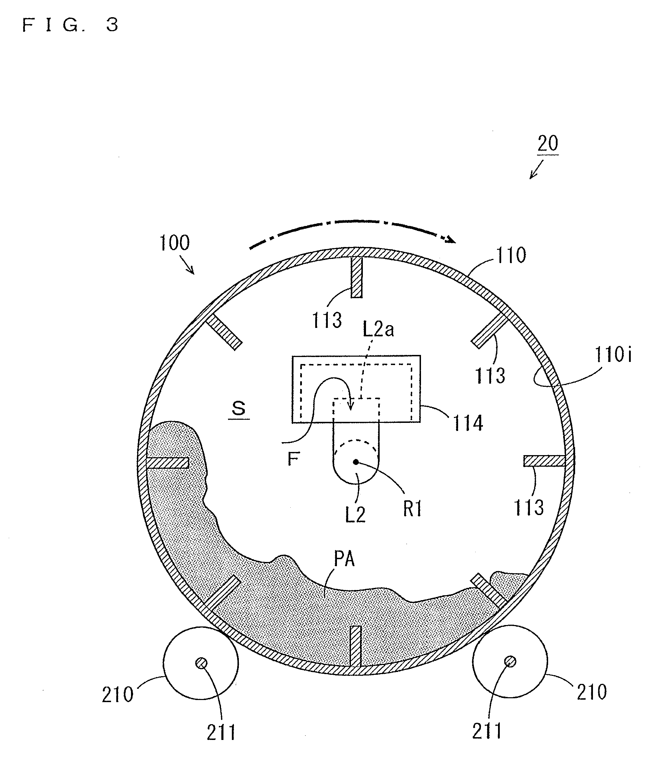

As shown in Fig. 2, the reaction container 100 has a cylindrical outer peripheral wall 110 and a pair of end surface walls 111. The disk-shaped end surface walls 111 are respectively provided at one end and the other end of the outer peripheral wall 110. The reaction container 100 is arranged in the heat-insulating cover 400 such that an axis of the outer peripheral wall 110 is parallel to a horizontal direction. The outer peripheral wall 110 has an inner peripheral surface 110i (Fig. 3) that is rotationally symmetric with the axis.

A processing space S surrounded by the inner peripheral surface 110i of the outer peripheral wall 110 and the inner surfaces of the pair of end surface walls 111 is formed in the reaction container 100. An opening 111h is formed at the one end surface wall 111 of the pair of end surface walls 111, and a gate 112 that can open and close is provided at the opening 111h. It is possible to store the unprocessed powder in the reaction container 100, or collect the processed powder from the inside of the reaction container 100 when opening the gate 112. During the powder process, the gate 112 is closed with the powder being stored in the reaction container 100.

A pipe supporting mechanism 120a is provided at the center of the one end surface wall 111. The pipe L1 is provided to penetrate the pipe supporting mechanism 120a. A pipe supporting mechanism 120b is provided at the center of the other end surface wall 111. The pipe L2 is provided to penetrate the pipe supporting mechanism 120b.

The pipe supporting mechanisms 120a, 120b are fixed to the heat-insulating cover 400 by a fixing member (not shown). The reaction container 100 is supported by the rotation driving device 200 to be rotatable around a rotation axis R1 that passes through the central axis of the outer peripheral wall 110. Further, the reaction container 100 is rotatable relative to each pipe supporting mechanism 120a, 120b. Details of the pipe supporting mechanisms 120a, 120b will be described below.

The rotation driving device 200 includes a plurality of (four in the present example) rollers 210a, 210b, 210c, 210d, a plurality of (two in the present example) power transmission shafts 211a, 211b, and a plurality of (two in the present example) motors 220a, 220b. The plurality of rollers 210a to 210d are respectively cylindrical, and are supported by a base (not shown) to be rotatable in a circumferential direction.

The rollers 210a, 210b are arranged in the circumferential direction of the outer peripheral wall 110 at a certain interval in the vicinity of the one end surface wall 111, and the rollers 210c, 210d are arranged in the circumferential direction of the outer peripheral wall 110 at a certain interval in the vicinity of the other end surface wall 111. Further, the rollers 210a, 210b are arranged in the longitudinal direction of the outer peripheral wall 110 at a certain interval, and the rollers 210b, 210d are arranged in the longitudinal direction of the outer peripheral wall 110 at a certain interval. In this manner, the plurality of rollers 210a to 210d are arranged below the reaction container 100. Parts of the outer peripheral surfaces of the plurality of rollers 210a to 210d are respectively in contact with the outer peripheral surface of the outer peripheral wall 110 of the reaction container 100.

The one power transmission shaft 211a is commonly attached to the rollers 210a, 210c to pass through the central axes of the rollers 210a, 210c. The power transmission shaft 211a is connected to the rotation shaft of the one motor 220a. Similarly, the other power transmission shaft 211b is commonly attached to the rollers 210b, 210d to pass through the central axes of the rollers 210b, 210d. The power transmission shaft 211b is connected to the rotation shaft of the other motor 220b.

The motors 220a, 220b are simultaneously operated, whereby the power transmission shafts 211a, 211b are respectively rotated in one direction. Thus, as indicated by the thick bold line in Fig. 2, the plurality of rollers 210a to 210d are simultaneously rotated in one direction. As a result, as indicated by the thick one-dot dash line in Fig. 2, the reaction container 100 is rotated in an opposite direction to the rotation direction of the plurality of rollers 210a to 210d.

The plurality of (two in the present example) cooling/heating devices 300 are provided in the heat-insulating cover 400 to be opposite to part of the outer peripheral wall 110 of the reaction container 100. The heating/cooling device 300 includes a heating device such as a heater, and a cooling device such as a fan, for example. During the powder process, the heating device is operated, so that the powder and the atmosphere in the reaction container 100 are heated. Alternatively, the cooling device is operated, so that the powder and the atmosphere in the reaction container 100 are cooled.

### (3) Inner Configuration of Reaction Container

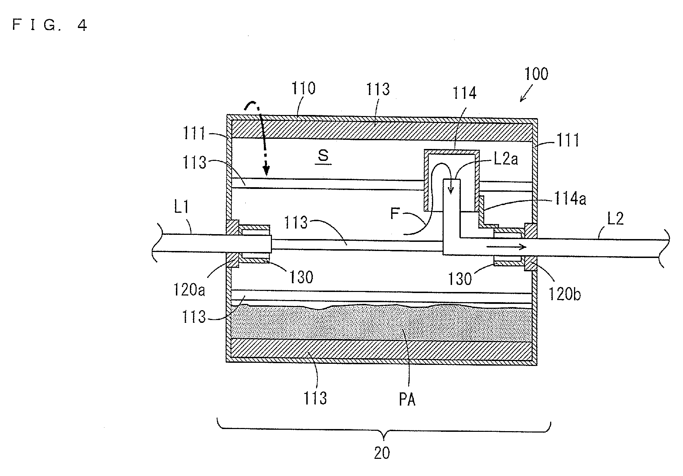

Fig. 3 is a cross sectional view taken along the line A-A of the powder stirring device 20 of Fig. 2, and Fig. 4 is a diagram schematically showing a vertical cross sectional view of the powder stirring device 20 along the rotation axis R1 of Fig. 2. The heating/cooling device 300 and the heat-insulating cover 400 of Fig. 2 are not shown in Fig. 3, and the rotation driving device 200, the heating/cooling device 300 and the heat-insulating cover 400 of Fig. 2 are not shown in Fig. 4.

As shown in Fig. 3, a plurality of plate members 113 are attached to the inner peripheral surface 110i of the outer peripheral wall 110 of the reaction container 100 at equal angular intervals with respect to the rotation axis R1 of the reaction container 100 to project from the inner peripheral surface 110i of the outer peripheral wall 110 toward the rotation axis R1. As shown in Fig. 4, each plate member 113 has a strip shape that extends in parallel with the rotation axis R1 from the inner surface of the one end surface wall 111 to the inner surface of the other end surface wall 111 in the reaction container 100.

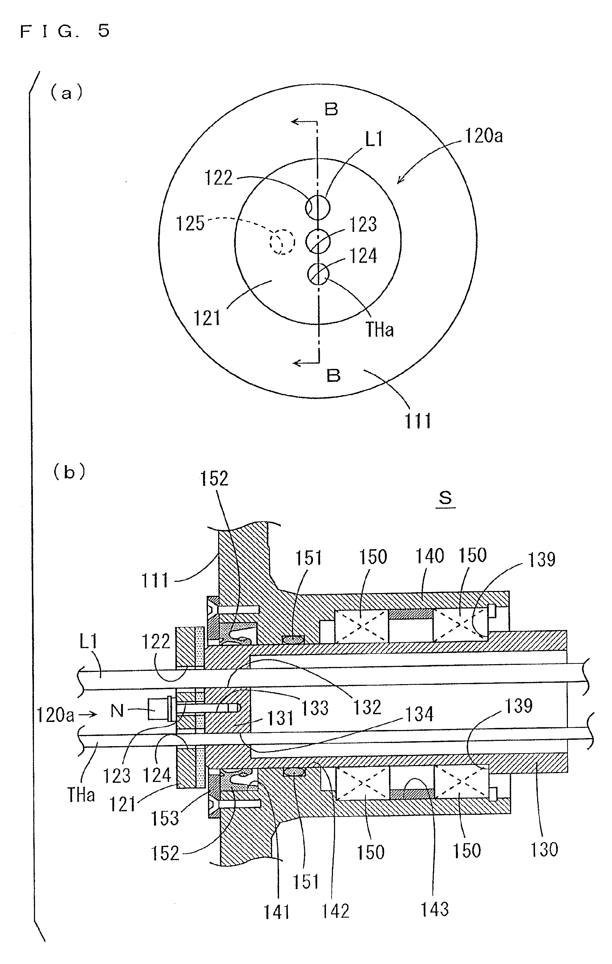

Part of the pipe L2 provided to penetrate the pipe supporting mechanism 120b of Fig. 1 is positioned in the reaction container 100. As shown in Figs. 3 and 4, a discharge port L2a for discharging the atmosphere in the reaction container 100 is formed at the tip end of the pipe L2 in the reaction container 100. The vicinity of the tip end of the pipe L2 is bent such that the discharge port L2a is directed upward. An umbrella member 114 is provided to cover the surroundings and a region above the discharge port L2a of the pipe L2. The umbrella member 114 is cylindrical with a lower portion being open and an upper portion being closed. The umbrella member 114 is fixed to a below-mentioned fixing hollow pipe 130 of Fig. 5 via a fixing member 114a.

In this case, a bent atmosphere flow-in path F is formed between part of the pipe L2 and the umbrella member 114. Thus, even when the powder PA is scattered in the reaction container 100, the scattered powder PA is difficult to flow into the discharge port L2a of the pipe L2. As a result, the powder PA is prevented from being discharged through the pipe L2, and the processing efficiency of the powder PA is improved.

### (4) Configuration of Pipe Supporting Mechanism

Fig. 5(a) is a front view of the pipe supporting mechanism 120a and its peripheral members of Fig. 2, and Fig. 5(b) is a longitudinal cross sectional view taken along the line B-B of the pipe supporting mechanism 120a and its peripheral members of Fig. 5(a).

As shown in Figs. 5(a) and 5(b), the pipe supporting mechanism 120a is mainly constituted by a disk member 121 and the fixing hollow pipe 130. At the center of the disk member 121, three through holes 122, 123, 124 are formed to be arranged in a row. The fixing hollow pipe 130 is cylindrical. Further, the fixing hollow pipe 130 has an end surface 131 that closes one end of the fixing hollow pipe 130. The other end of the fixing hollow pipe 130 (not shown) is open. At the end surface 131 of the fixing hollow pipe 130, a pipe holding hole 132, a screw hole 133 and a temperature measurement hole 134 that respectively correspond to the through holes 122, 123, 124 of the disk member 121 are formed. Further, an annular step 139 that extends in a circumferential direction is formed at part of the outer peripheral surface of the fixing hollow pipe 130. An outer diameter of the fixing hollow pipe 130 from the end surface 131 to the step 139 is small as compared to the outer diameter from the step 139 to the other end of the fixing hollow pipe 130.

At the center of the end surface wall 111 to which the pipe supporting mechanism 120a is attached, a tubular projection 140 for attachment of the fixing hollow pipe 130 Is formed. The tubular projection 140 is formed to project internally of the reaction container 100 from the inner surface of the end surface wall 111.

A plurality of annular grooves 141, 142, 143 are formed at the inner peripheral surface of the tubular projection 140 to be arranged along the central axis of the reaction container 100. The annular groove 141 is formed to open externally of the reaction container 100. A dust seal 152 is fitted into the annular groove 141. An annular plate member 153 is attached to the outer surface of the end surface wall 111 to cover the dust seal 152. An O-ring 151 is attached to the annular groove 142. A plurality of bearings 150 are attached to the annular groove 143. The fixing hollow pipe 130 is inserted into the tubular projection 140. At this time, the inner periphery of the dust seal 152, the inner periphery of the O-ring 151, and the outer peripheral surface of the fixing hollow pipe 130 are in contact with one another to be capable of sliding. Further, the inner peripheral surfaces of the plurality of bearings 150 and the outer peripheral surface of the fixing hollow pipe 130 are in contact with one another. Thus, the reaction container 100 and the fixing hollow pipe 130 are rotatable relative to each other.

The disk member 121 is screwed onto the end surface 131 of the fixing hollow pipe 130 with the fixing hollow pipe 130 being inserted into the tubular projection 140. Specifically, a screw N is attached to the screw hole 133 of the fixing hollow pipe 130 through the through hole 123 of the disk member 121.

At this time, part of the disk member 121 abuts against the annular plate member 153 that is screwed onto the end surface wall 111. Further, the step 139 of the fixing hollow pipe 130 abuts against part of the bearing 150. Thus, the annular plate member 153, the tubular projection 140 and the plurality of bearings 150 are held by the disk member 121 and the step 139 of the fixing hollow pipe 130 in a horizontal direction. Accordingly, the pipe supporting mechanism 120a constituted by the disk member 121 and the fixing hollow pipe 130 Is attached to be rotatable relative to the end surface wall 111.

The pipe L1 is attached to the pipe supporting mechanism 120a to pass through the through hole 122 of the disk member 121 and the pipe holding hole 132 of the fixing hollow pipe 130. Further, a temperature measurement pipe THa is attached to the pipe supporting mechanism 120a to pass through the through hole 124 of the disk member 121 and the temperature measurement hole 134 of the fixing hollow pipe 130. A temperature sensor such as a thermocouple is inserted into the temperature measurement pipe THa. In this case, the heating/cooling device 300 of Fig. 2 can be controlled based on the temperature inside of the processing space S detected by the temperature sensor.

As described above, the dust seal 152 and the O-ring 151 are attached between the fixing hollow pipe 130 and the tubular projection 140. Thus, the external space of the reaction container 100 and the processing space S of the reaction container 100 are reliably shielded by the dust seal 152 and the O-ring 151 with the pipe supporting mechanism 120a being attached to the end surface wall 111. The pipe supporting mechanism 120b of Fig. 2 has the same configuration as the above-mentioned pipe supporting mechanism 120a.

As indicated by the dotted line in Fig. 5(a), a through hole 125 for attachment of the pipe L2 to the pipe supporting mechanism 120a may be formed. In this case, the pipe L2 of Fig. 1 is attached to the through hole 125, whereby it is not necessary to attach the pipe supporting mechanism 120b to the other end surface wall 111.

### (5) Operation during Powder Process

In the powder processing apparatus 1 of Fig. 1, when the process of the powder PA is performed, a predetermined amount of the powder PA is first stored in the reaction container 100 of Fig. 2.

Next, the processing gas generated by the processing gas generating device 10 of Fig. 1 is led to the reaction container 100 through the pipe L1. Simultaneously, the atmosphere in the reaction container 100 is discharged into the separator 30 through the pipe L2.

In this state, the rotation driving device 200 of Fig. 2 is operated, whereby the reaction container 100 is rotated at a predetermined rotation speed with the rotation axis R1 used as a center. The reaction container 100 is rotated, so that the entire stored powder PA is stirred in the reaction container 100. Thus, the entire powder PA is processed.

Thereafter, when a predetermined time period is elapsed, the rotation operation of the reaction container 100 by the rotation driving device 200 is stopped, and the supply of the processing gas into the reaction container 100 is stopped. Further, the atmosphere including the processing gas in the reaction container 100 is replaced with an atmosphere such as a nitrogen gas, and the processed powder PA is taken out from the reaction container 100.

### (6) Effects

(6-1) In the powder stirring device 20 according to the present embodiment, the powder PA positioned at a lowest portion of the inner peripheral surface 110i of the reaction container 100 is lifted with the rotation of the reaction container 100 by the friction force generated between the inner peripheral surface 110i and the powder PA.

The plurality of plate members 113 are attached to the inner peripheral surface 110i of the outer peripheral wall 110 of the reaction container 100. Therefore, even if the friction force generated between the powder PA and the inner peripheral surface 110i during the rotation of the reaction container 100 is small, the powder PA can be lifted to a certain height by the plurality of plate members 113.

The powder in a surface layer of the lifted power PA moves to slide to a lowest portion of the inner peripheral surface 110i, and the remaining powder PA in a lower layer is further lifted. Thereafter, the reaction container 100 is further rotated, whereby the friction force generated between the inner peripheral surface 110i and the powder PA in the lower layer, and the friction force generated between the surfaces of the plate members 113 and the powder PA in the lower layer become smaller than gravity exerted on the powder PA. Thus, the lifted powder PA in the lower layer moves to slide or fall to the lowest portion of the inner peripheral surface 110i. Thus, the lifted powder PA in the lower layer moves to slide or fall to the lowest portion of the inner peripheral surface 110i. As a result, the powder PA in the surface layer and the powder PA in the lower layer are replaced with each other.

Such operation is repeated, so that the entire powder PA is evenly stirred in the rotating reaction container 100. Thus, it is possible to effectively bring the reactive processing gas into contact with the surface of the powder PA without increasing the rotation speed of the reaction container 100. As a result, the powder PA can be efficiently and evenly processed while safety is ensured.

(6-2) The pipe supporting mechanisms 120a, 120b respectively provided at the centers of the pair of end surface walls 111 are fixed to the heat-insulating cover 400. The reaction container 100 is provided to be rotatable relative to the pipe supporting mechanisms 120a, 120b. The pipes L1, L2 are provided to respectively penetrate the pipe supporting mechanisms 120a, 120b. In this case, the pipe supporting mechanisms 120a, 120b are not rotated during the rotation of the reaction container 100. Therefore, the configuration of the pipes L1, L2 is not complicated. As a result, the simply configured and low-cost powder stirring device 20 is realized.

### (7) Other Embodiments

(7-1) While a mixed gas including any one of a fluorine gas, an oxygen gas and a nitrogen gas is used as the processing gas in the above-mentioned embodiment, the invention is not limited to this. Another processing gas may be used. For example, a mixed gas made of a fluorine gas and a nitrogen gas may be used as the processing gas. In this case, it is possible to increase the hydrophobicity of the powder PA by performing the surface process of the powder PA. Further, if a dust explosion is prevented, the processing gas does not have to include a nitrogen gas. Further, a processing gas that does not include a fluorine gas such as an ozone gas may be used. In this manner, the processing gas can be selected according to the type of the process.

(7-2) While the disk-shaped end surface walls 111 are respectively provided at one end and the other end of the outer peripheral wall 110 of the reaction container 100 in the above-mentioned embodiment, the shape of the both ends of the reaction container 100 is not limited to this. For example, the conic end surface walls with the bottoms being open may be respectively provided at the one end and the other end of the outer peripheral wall 110. In this case, part of the powder PA moves to slide on an inner surface of the end surface wall in the reaction container 100 during the powder process. Thus, the powder PA can be more evenly stirred in the vicinity of the end surface wall in the reaction container 100.

(7-3) In the above-mentioned embodiment, the plurality of plate members 113 are attached to the inner peripheral surface 110i of the outer peripheral wall 110 at equal angular intervals with respect to the rotation axis R1 to project toward the rotation axis R1 from the inner peripheral surface 110i of the outer peripheral wall 110 in order to lift the powder PA to a certain height in the reaction container 100 during the powder process.

The invention is not limited to this, and if the powder PA can be lifted to a certain height, the plurality of plate members 113 do not have to be provided at equal angular intervals with respect to the rotation axis R1.

Further, the plurality of members having triangular cross sections may be attached on the inner peripheral surface 110i instead of the plurality of plate members 113 being attached to the inner peripheral surface 110i. Alternatively, a plurality of bar-shaped members having circular cross sections, triangular cross sections or quadangular cross sections may be dispersively arranged on the inner peripheral surface 110i to extend from the inner peripheral surface 110i toward the rotation axis R1.

Further, while the plurality of plate members 113 are attached on the inner peripheral surface 110i to be in parallel with the rotation axis R1 in the above-mentioned embodiment, the invention is not limited to this. The plurality of plate members 113 may be attached on the inner peripheral surface 110i to extend in different directions from one another between each of two adjacent plate members 113.

(7-4) While the discharge port L2a Is formed at the tip end of the pipe L2, and the vicinity of the tip end of the pipe L2 is bent such that the discharge port L2a is directed upward in the above-mentioned embodiment, the invention is not limited to this. The opening may be formed to be directed upward at the upper surface of the pipe L2 except for the tip end of the pipe L2, whereby the opening may be used as the discharge port L2a.

Further, the pipe L2 may have the plurality of discharge ports L2a. For example, a plurality of openings are formed to be directed upward at the upper surface of the pipe L2 except for the tip end of the pipe L2. Thus, the plurality of formed openings can be respectively used as the plurality of discharge ports L2a.

While the umbrella member 114 is cylindrical in the above-mentioned embodiment, the shape of the umbrella member 114 is not limited to this. For example, the umbrella member 114 may be conic with the bottom being open. In this case, the powder PA that adheres to an upper portion of the umbrella member 114 moves to slide on an upper surface of the umbrella member 114. Thus, the scattered powder PA in the reaction container 100 can be smoothly led to a lower portion in the reaction container 100.

(7-5) While the plurality of rollers 210a to 210d of the rotation driving device 200 are rotated such that the reaction container 100 is rotated in the above-mentioned embodiment, the configuration for rotating the reaction container 100 is not limited to this example. Instead that the reaction container 100 is rotated by the plurality of rollers 210a to 210d, the reaction container 100 may be rotated using a rotation belt.

### (8) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the processing gas is an example of a processing gas, the powder stirring device 20 is an example of a powder stirring device, the axis of the reaction container 100 and the rotation axis R1 are examples of an axis, the inner peripheral surface 100i is an example of an inner peripheral surface, the reaction container 100 is an example of a reaction container and the rotation driving device 200 is an example of a rotation driver.

Further, the pipe L1 is an example of a gas introduction system, the pipe L2 is an example of a gas discharge system, the plurality of plate members 113 are examples of a projection and the plurality of plate members 113, and the discharge port L2a is an example of a discharge port.

Further, the pipe L2 is an example of a gas outlet pipe, the umbrella member 114 is an example of a powder flow-in prevention member and the pipe supporting mechanisms 120a, 120b are examples of a fixing member.

As each of various constituent elements recited in the claims, various other elements having configurations or functions described in the claims can be also used.

### <B> Reference Configuration

Reference configuration relates to powder processing apparatus that processes powder using a processing gas.

### [1] First Reference Configuration

Hereinafter, the powder processing apparatus according to a first reference configuration will be described with reference to drawings.

### (1) Overall Configuration of Powder Processing Apparatus

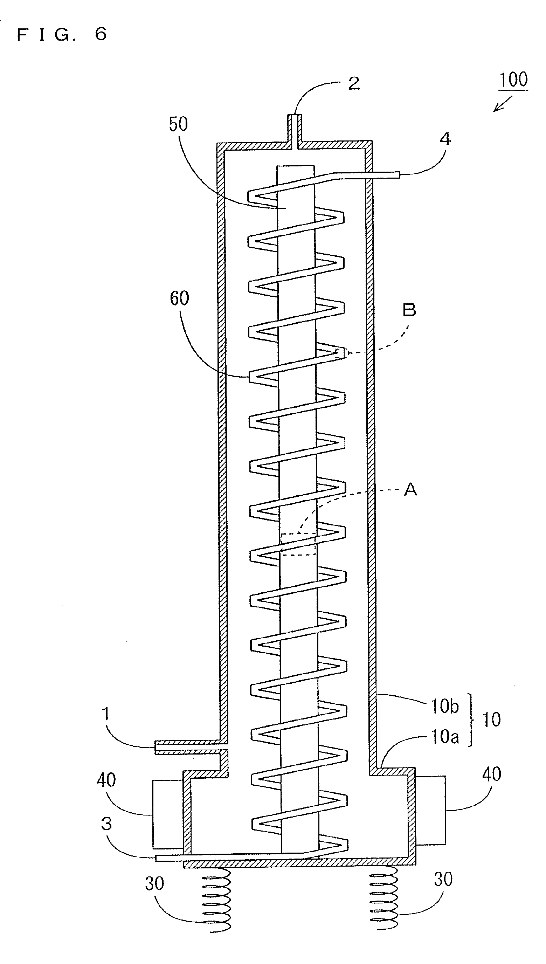

Fig. 6 is a side view showing the configuration of the inside of the powder processing apparatus according to the first reference configuration. As shown in Fig. 6, the powder processing apparatus 100 includes a processing container 10, a plurality of springs 30, a plurality of vibration motors 40, a shaft 50 and an ascending transport path 60. The processing container 10 is constituted by a lower casing 10a and an upper casing 10b.

The lower casing 10a has four side surface elements, a bottom surface element and an upper surface element. Part of the upper surface element of the lower casing 10a is open. The upper casing 10b has a cylindrical shape constituted by an upper surface element and a peripheral surface element. A bottom portion of the upper casing 10b is open. The upper casing 10b is integrally provided at the upper surface element of the lower casing 10a so as to extend in a vertical direction with the bottom portion being directed downward. The inner space of the lower casing 10a and the inner space of the upper casing 10b communicate with each other and form a processing space.

The plurality of springs 30 are provided at the lower surface of the bottom surface element of the lower casing 10a. The vibration motors 40 are respectively provided at the two opposing side surface elements of the lower casing 10a. The columnar central shaft 50 is provided inside of the processing container 10 so as to extend in a vertical direction. Further, the ascending transport path 60 that extends in the vertical direction while drawing spirals with the central shaft 50 used as a center is provided inside of the processing container 10.

A gas inlet port 1 for introduction of the processing gas is provided at a lower portion of the peripheral surface of the upper casing 10b. Further, a gas outlet port 2 for discharge of the processing gas is provided at the upper surface of the upper casing 10b. In this case, the processing gas is successively introduced into the processing container 10 of the powder processing apparatus 100, and the processing gas can be successively discharged. Thus, the concentration of the processing gas in the processing container 10 during the process using the processing gas can be kept substantially constant. As a result, the powder can be more evenly processed.

A powder supply port 3 for supply of the powder to the ascending transport path 60 is provided at a lower portion of the one side surface element of the lower casing 10a. The one end (the lower end) of the ascending transport path 60 communicates with the powder supply port 3. Further, a powder recovery port 4 for recovery of the powder processed in the ascending transport path 60 is provided at an upper portion of the peripheral surface element of the upper casing 10b. The other end (the upper end) of the ascending transport path 60 communicates with the powder recovery port 4. The supply of the powder to the ascending transport path 60 and the recovery of the powder from the ascending transport path 60 are performed using a screw feeder or a gas transport method.

In the ascending transport path 60, the plurality of vibration motors 40 are driven, so that the plurality of springs 30 are extended and contracted, and vibrated. Thus, the powder supplied from the powder supply port 3 is transported while sliding to ascend on the inclined spiral ascending transport path 60. The torsional vibration with an upper/lower displacement is added to the ascending transport path 60 by the vibration motor 40, whereby the powder ascends along the ascending transport path 60. As a device that transports the powder to ascend the spiral ascending transport path 60, a so-called spiral elevator is preferably used.

The processing gas is supplied from the gas inlet port 1, and the processing gas is discharged from the gas outlet port 2, whereby the processing gas flows inside of the processing container 10 of the powder processing apparatus 100. The supplied powder is processed by the processing gas while being transported from a lower portion to an upper portion of the ascending transport path 60. Thus, the surface of the powder can be processed by the processing gas. The powder processed by the processing gas is recovered from the powder recovery port 4. The recovery of the powder from the powder recovery port 4 is performed using a screw feeder or a gas transport method. Further, the processing gas including a fluorine gas is discharged from the gas outlet port 2, and is detoxified in a gas processing equipment (not shown).

In the present reference configuration, the process using fluorine that is a processing gas is a surface process in which the processing gas is brought into contact with the surface of the powder to modify the surface of the powder. When the processing gas that includes a fluorine gas, an oxygen gas and a nitrogen gas is used as a processing gas, it is possible to add the hydrophobicity by introducing the group of the hydrophobicity to the function group of the surface of the powder. Further, it is possible to add water repellency by adding fluorine to the surface of the powder. The processing gas is not limited to a fluorine gas, an oxygen gas or a nitrogen gas, and can be selected according to the type of the process.

### (2) Configuration of Ascending Transport Path

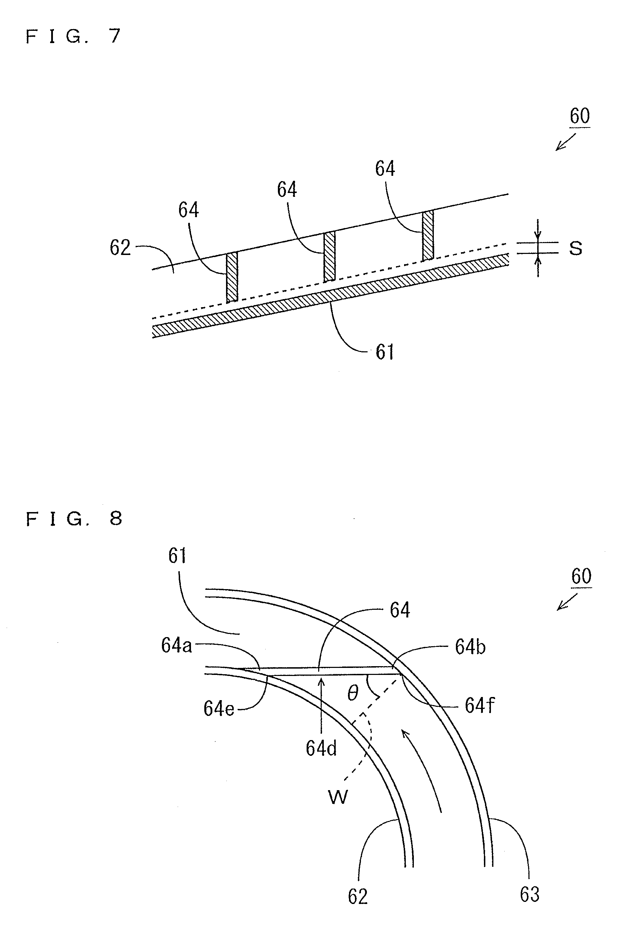

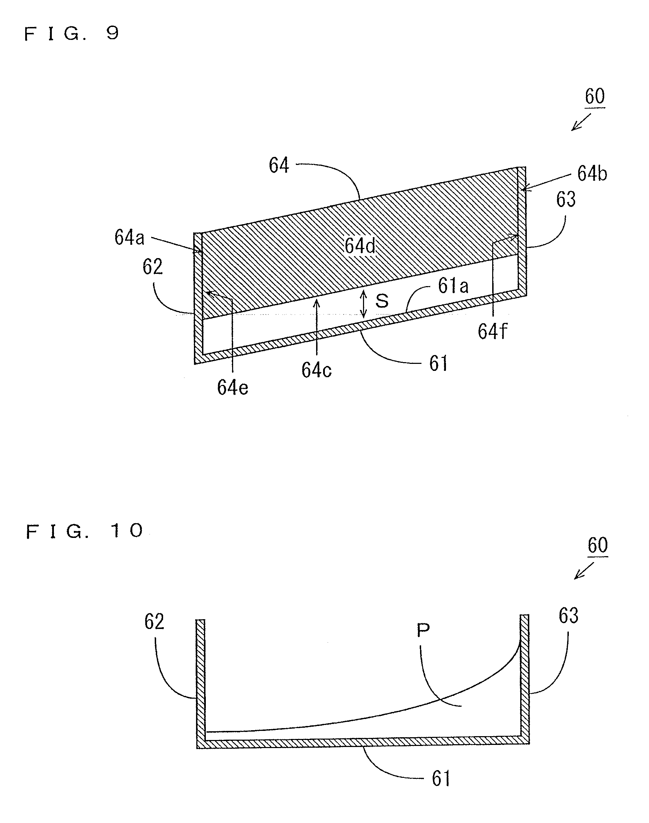

Fig. 7 is an enlarged cross sectional view of a portion A of the ascending transport path 60 of Fig. 6. Fig. 8 is a plan view showing one example of a portion B of the ascending transport path 60 of Fig. 6. Fig. 9 is an enlarged cross sectional view showing one example in the portion B of the ascending transport path 60 of Fig. 6.

As shown in Fig. 9, the ascending transport path 60 has a strip-shaped transport element 61 that extends spirally in a vertical direction, and side surface elements 62, 63 that extend along the both sides of the strip-shaped transport element 61. The strip-shaped transport element 61 has an upper surface (a powder contact surface) 61a that comes into contact with the powder. The side surface elements 62, 63 are guides that prevent the moving powder on the strip-shaped transport element 61 from falling.

As shown in Fig. 7, a plurality of quadrilateral height limitation members 64 are provided at the ascending transport path 60 at predetermined intervals. As shown in Fig. 9, the height limitation member 64 has side portions 64a, 64b that are respectively connected to the side surface elements 62, 63 of the ascending transport path 60, and has a lower end 64c that is opposite to the strip-shaped transport element 61. The lower end 64c of the height limitation member 64 is arranged to be in parallel with the strip-shaped transport element 61 of the ascending transport path 60. A clearance S is formed between the lower end 64c and the strip-shaped transport element 61 of the ascending transport path 60. As shown in Fig. 8, the height limitation member 64 has a surface 64d located at an upstream position regarding the moving direction of the powder in the ascending transport path 60.

The powder moving in the ascending transport path 60 passes through the clearance S between the lower end 64c of the height limitation member 64 and the strip-shaped transport element 61 of the ascending transport path 60. Here, when the powder on the strip-shaped transport element 61 of the ascending transport path 60 is raised to a position higher than the lower end 64c of the height limitation member 64, the height of the powder is limited at the lower end 64c of the height limitation member 64.

As shown in Figs. 8 and 9, the side surface element 62 and the side portion 64a are positioned at the inside portion of the spiral with respect to the strip-shaped transport element 61, and the side surface element 63 and the side portion 64b are positioned at the outside portion of the spiral with respect to the strip-shaped transport element 61. A surface 64d has a side 64e at the side portion 64a and a side 64f at the side portion 64b. This surface 64d is inclined such that the side 64e is located at a further downstream position than the side 64f regarding a direction W vertical to the tangential direction of the spiral. In Fig. 8, the direction of the arrow on the strip-shaped transport element 61 is a direction in which the powder moves, and a direction directed from an upstream position toward a downstream position. In the example of Fig. 8, the surface 64d is provided in the state of having an inclination angle θ with respect to the direction W vertical to the tangential direction of the spiral. The inclination angle θ is larger than 0° and smaller than 90°.

The powder moving in the ascending transport path 60 is likely to localize at the outside portion of the spiral due to the centrifugal force. Even in this case, because the surface 64d is inclined such that the inner side 64e of the height limitation member 64 is located at a further downstream position than the outer side 64f, the powder localizing at the side 64f is led toward the side 64e along the surface 64d of the height limitation member 64. Thus, the height of the powder is efficiently limited at the lower end 64c of the height limitation member 64.

The inclination angle θ of the height limitation member 64 is not limited in particular as long as the height of the passing powder can be limited.

Further, the plurality of height limitation members 64 are provided at the ascending transport path 60. The plurality of height limitation members 64 are preferably provided at equal intervals. Thus, the localization of the powder is further resolved. As a result, the powder can be more evenly processed by the processing gas.

Fig. 10 is a cross sectional view showing the state in which the powder localizes in the ascending transport path 60. In the example of Fig. 10, the strip-shaped transport element 61 of the ascending transport path 60 is horizontally provided. In this case, the powder P is transported on the strip-shaped transport element 61 in the state of localizing at an outside portion of the spiral of the upper surface 61a due to the centrifugal force. In such a state in which the powder P localizing, the powder P at the position adjacent to the side surface element 63 of the ascending transport path 60 is thickly piled up, so that part of the powder is buried inside of the powder P and is not exposed on the surface during transportation. In the present reference configuration, the height limitation member 64 limits the height of the localizing powder when the powder passes through the clearance S at the lower portion of the height limitation member 64, so that the part that has been buried inside of the piled up powder P and not exposed on the surface becomes exposed on the surface. Thus, the entire powder comes into contact with the processing gas. As a result, the powder can be more evenly processed by the processing gas.

In the present reference configuration, as shown in Fig. 9, the upper surface 61a may be inclined such that a portion of the upper surface 61a positioned at the inside portion of the spiral is lower than a portion of the upper surface 61a positioned at the outside portion of the spiral. In this case, the force for moving to the inside portion along the inclined upper surface 61a is exerted due to gravity, and also the force for moving to the outside portion is exerted due to the centrifugal force, on the powder moving in the ascending transport path 60. Therefore, the localization of the powder at the outside portion in the ascending transport path 60 due to the centrifugal force is inhibited. Thus, the height of the powder is efficiently limited at the lower end 64c of the height limitation member 64. As a result, the entire powder can be evenly processed using the processing gas.

While a portion of the upper surface 61a positioned at the inside portion of the spiral is inclined to be lower than a portion of the upper surface 61a positioned at the outside portion of the spiral as shown in Fig. 9 in the present reference configuration, the invention is not limited to this. As shown in Fig. 10, the upper surface 61a may be horizontal. Even in this case, the height of the powder can be limited by the height limitation member 64.

Further, in the present reference configuration, the height limitation member 64 is a plate-shaped member installed with the clearance S being provided between the lower end 64c and the strip-shaped transport element 61. The shape of this lower end 64c is not limited to particular one, and may be linear, wavy or the like. If the lower end 64c is linear, the powder can be smoothed. If the lower end 64c is wavy, an area in which the powder is exposed can be increased, so that a contact area of the powder with the processing gas can be increased.

The process using the processing gas is largely influenced by a time period. It is possible to adjust a processing time period by changing the movement speed of the powder in the ascending transport path 60. Further, it is possible to adjust the processing time period by changing the transport distance of the powder.

While the powder is processed while the processing gas flows in the processing container 10 of the powder processing apparatus 100 in the present reference configuration, the powder may be processed in a state in which the processing gas is enclosed in the processing container 10.

While the powder processing apparatus 100 has the ascending transport path 60 that transports the powder upward in the present reference configuration, the powder processing apparatus 100 may have a descending transport path that transports the powder downward instead of the ascending transport path 60.

### (3) Effects

In the present reference configuration, when the powder moving in the ascending transport path 60 passes through the clearance S between the height limitation member 64 and the strip-shaped transport element 61, the height of the powder is limited by the height limitation member 64. A portion that is buried inside of the piled up powder is exposed on the surface due to this limitation of the height of the powder. Thus, the entire powder comes into contact with the processing gas. As a result, the entire powder can be successively evenly processed by the processing gas.

Further, the powder is transported while sliding on the strip-shaped transport element 61 of the ascending transport path 60 without being scattered in the air in the processing container 10. Therefore, the heat generated during the process of the powder is radiated through the strip-shaped transport element 61 and the side surface elements 62, 63 of the ascending transport path 60. Thus, the surface of the powder is prevented from being overheated. As a result, modification of the powder caused by heat is prevented, and the surface of the powder is prevented from being burnt. Further, scattering of the powder and a dust explosion of the powder due to heat can be prevented. The contact surface with the powder in the striped-shaped transport element 61 is preferably made of metal. In this case, heat of the powder can be radiated through the contact surface with the powder in the strip-shaped transport element 61. Thus, the powder can be more evenly processed.

### [2] Second Reference Configuration

### (1) Overall Configuration of Powder Processing Apparatus

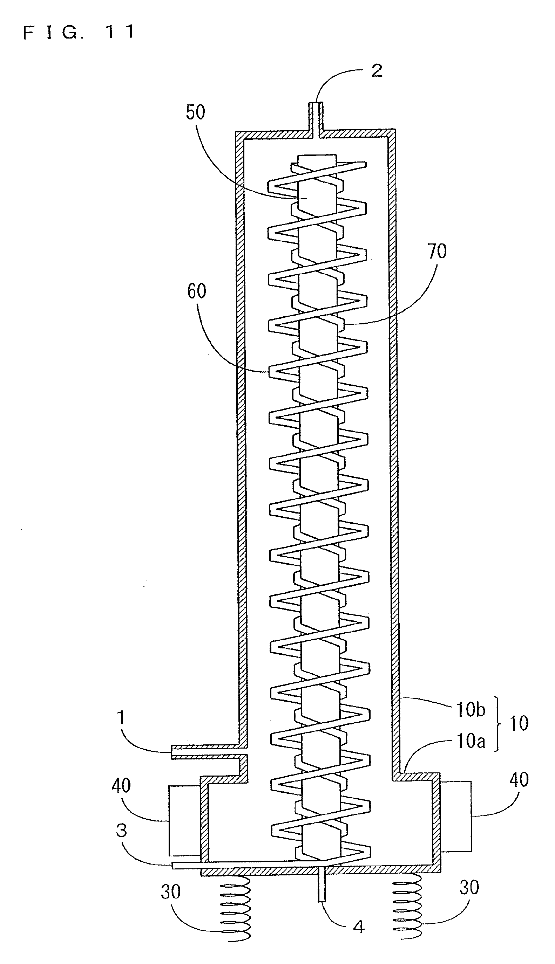

Regarding a powder processing apparatus 100 according to the second reference configuration, difference from the powder processing apparatus 100 according to the first reference configuration will be described. Fig. 11 is a side view showing the configuration of the inside of the powder processing apparatus 100 according to the second reference configuration. As shown in Fig. 11, the powder processing apparatus 100 according to the present reference configuration further includes a descending transport path 70.

The descending transport path 70 is provided in a vertical direction to extend spirally inside of the ascending transport path 60 with the central shaft 50 used as a center in the processing container 10. The upper end of the ascending transport path 60 and the upper end of the descending transport path 70 are connected to each other. The direction of turns of the spiral of the descending transport path 70 is opposite to the direction of turns of the spiral of the ascending transport path 60. The powder recovery port 4 is not provided at the upper portion of the peripheral surface element of the upper casing 10b, but is provided at the bottom surface element of the lower casing 10a. The other end of the descending transport path 70 communicates with the powder recovery port 4.

The descending transport path 70 has the same configuration as the ascending transport path 60 of Figs. 7 to 9 except for the direction of turns of the spiral. A plurality of height limitation members 64 are provided at the descending transport path 70 similarly to the ascending transport path 60.

The powder supplied from the powder supply port 3 moves while sliding to ascend on the inclined spiral ascending transport path 60. The powder moving along the ascending transport path 60 is led to the upper end of the descending transport path 70 via the upper end of the ascending transport path 60. Thereafter, the powder moves while sliding to descend along the descending transport path 70.

Because the direction of turns of the spiral of the ascending transport path 60 and the direction of turns of the spiral of the descending transport path 70 are opposite to each other, the same vibration is applied by a vibration motor 40, whereby the movement direction of the powder in the ascending transport path 60 and the movement direction of the powder in the descending transport path 70 are opposite to each other. Thus, the powder can move forward and backward in a vertical direction in the processing container 10. The powder is processed by the processing gas while moving forward and backward. The powder processed by the processing gas is recovered from the powder recovery port 4.

### (2) Effects

In the present reference configuration, the powder is processed by the processing gas not only when the powder moves on the ascending transport path 60 but also when the powder moves on the descending transport path 70. Thus, it is possible to increase the processing time period of the powder without increasing the size of the processing container 10. As a result, the size of the powder processing apparatus can be reduced.

Further, the height limitation members 64 are provided at the ascending transport path 60 and the descending transport path 70. Therefore, the height of the powder is limited by the height limitation members 64 when the powder moves on the ascending transport path 60 and the descending transport path 70. Thus, the powder can be evenly processed by the processing gas over a long period of time.

### [3] Third Reference Configuration

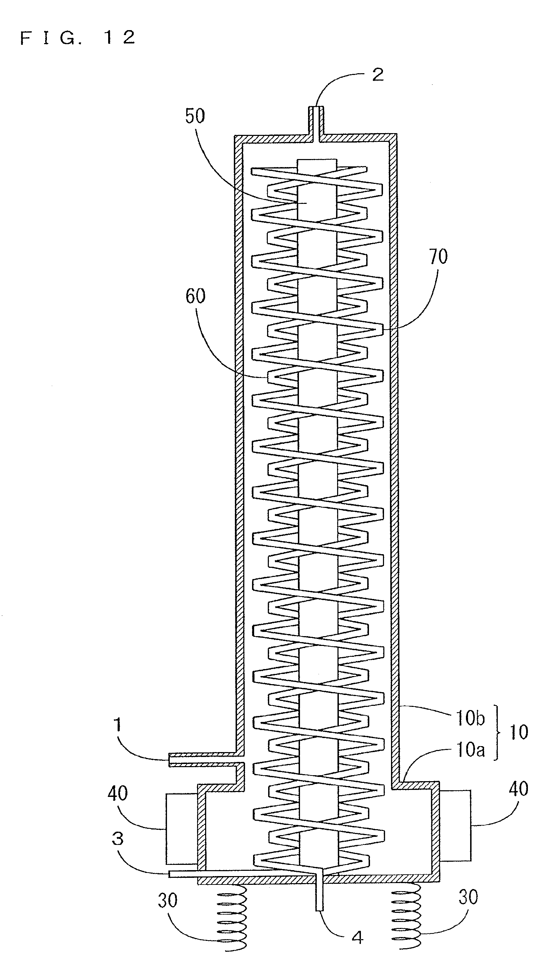

Fig. 12 is a side view showing the configuration of the inside of a powder processing apparatus 100 according to the third reference configuration. As shown in Fig. 12, the ascending transport path 60 is arranged inside of the descending transport path 70.

Generally, the movement speed of the powder in the descending transport path 70 is higher than the movement speed of the powder in the ascending transport path 60 due to gravity. In the powder processing apparatus 100 of Fig. 12, the descending transport path 70 is longer than the ascending transport path 60. Thus, the movement speed of the powder in the descending transport path 70 can be made substantially equal to the movement speed of the powder in the ascending transport path 60.

### [4] Other Reference Configuration

(1) While the powder moves from the lower end toward the upper end in the ascending transport path 60 in the powder processing apparatus 100 according to the first reference configuration, the configuration is not limited to this. The powder transport path may be configured such that the powder moves from the upper end toward the lower end.
(2) While the powder moves from the upper end toward the lower end in the descending transport path 70 after moving from the lower end toward the upper end in the ascending transport path 60 in the powder processing apparatus 100 according to the second and third reference configurations, the configuration is not limited to this. The ascending transport path 60 and the descending transport path 70 may be connected such that the powder moves from the lower end toward the upper end in the ascending transport path 60 after moving from the upper end toward the lower end in the descending transport path 70.
(3) While the number of turns of the descending transport path 70 and the number of turns of the ascending transport path 60 are equal in the powder processing apparatus 100 according to the second and third reference configurations, the configuration is not limited to this. The number of turns of the descending transport path 70 may be more than the number of turns of the ascending transport path 60. In this case, the inclination of the descending transport path 70 is smaller than the inclination of the ascending transport path 60, and the length of the descending transport path 70 is longer than the length of the ascending transport path 60. Thus, the movement speed of the powder in the descending transport path 70 can be made substantially equal to the movement speed of the powder in the ascending transport path 60.

### [5] Overall Concept of Reference Configuration

(1) According to the reference configurations, the powder processing apparatus that processes powder using a processing gas includes a powder transport path that has a strip-shaped transporter that extends spirally in a vertical direction and on which the powder moves, a powder supplier for supplying the powder to the powder transport path, a vibration applier that vibrates the powder transport path to move the powder supplied to the powder transport path along the strip-shaped transporter, a processing container in which the powder supplied to the powder transport path is processed by the processing gas while moving, a powder recoverer that recovers the processed powder, and at least one height limitation member that limits the height of the powder moving on the strip-shaped transporter.

In this powder processing apparatus, the powder transport path extends spirally in a vertical direction. The powder transport path has a strip-shaped transporter for movement of the powder. The powder is supplied to the powder transport path by the powder supplier. The powder transport path is vibrated by the vibration applier, whereby the powder supplied to the powder transport path moves along the powder transport path. The powder moving in the powder transport path is in a state of localizing at the outside portion of the spiral due to the centrifugal force while moving. Even in such a case, the height of the powder is limited by the height limitation members. Thus, the powder is prevented from localizing and gathering while moving. Further, the powder is stirred by the height limitation members. Therefore, the processing gas is easy to come into contact with the entire powder. As a result, the powder can be evenly processed by the processing gas.

(2) The height limitation member may have a lower end that is opposite to the strip-shaped transporter, and may be arranged such that a clearance is formed between the lower end and the strip-shaped transporter.

In this case, the powder moving in the powder transport path passes through the clearance between the lower end of the height limitation member and the strip-shaped transporter of the powder transport path. When the powder on the strip-shaped transporter of the powder transport path is raised to a position higher than the lower end of the height limitation member, the height of the powder is efficiently limited by the lower end of the height limitation member.

(3) A side portion, which is positioned at the inside portion of the spiral of the strip-shaped transporter, of the height limitation member may be located at a further downstream position than a side portion that is positioned at the outside portion of the spiral regarding the movement direction of the powder.

The powder moving in the powder transport path is easy to localize at the outside portion of the spiral due to the centrifugal force. Even in this case, because the portion, which is positioned at the inside portion of the spiral of the strip-shaped transporter, of the height limitation member is located at a further downstream position than the portion positioned at the outside portion of the spiral, the powder localizing at the portion positioned at the outside portion of the spiral is led to the portion positioned at the inside portion of the spiral along one surface of the height limitation member. Thus, the height of the powder is efficiently limited by the lower end of the height limitation member.

(4) A contact surface with the powder in the strip-shaped transporter may be inclined such that an inside of the spiral is lower than an outside of the spiral.

In this case, the force for moving to the inside along the inclined upper surface is exerted, and the force for moving to the outside is exerted, due to gravity, on the powder that moves on the strip-shaped transporter. Thus, the powder is prevented from localizing at the inside portion in the powder transport path due to the centrifugal force. As a result, the height of the powder is efficiently limited by the lower end of the height limitation member.

(5) The powder transport path includes a first transport path that extends spirally in a vertical direction, and has a first strip-shaped transporter for movement of the powder, and a second transport path that extends spirally in a vertical direction, and has a second strip-shaped transporter for movement of the powder, the first and second strip-shaped transporters are connected to each other at one end, and a direction of turns of the spiral of the second strip-shaped transporter may be opposite to a direction of turns of the spiral of the first strip-shaped transporter.

In this case, the powder moving along the first strip-shaped transporter is led to the one end of the second strip-shaped transporter via the one end of the first strip-shaped transporter. Thereafter, the powder moves along the second strip-shaped transporter. Because the direction of turns of the spiral of the first strip-shaped transporter and the direction of turns of the spiral of the second strip-shaped transporter are opposite to each other, the same vibration is applied by the vibration applier, whereby the movement direction of the powder in the first transport path and the movement direction of the powder in the second transporter are opposite to each other. Thus, the powder can move forward and backward in a vertical direction in the processing container.

Therefore, the powder is processed by the processing gas not only in moving on the first strip-shaped transporter but also in moving on the second strip-shaped transporter. Thus, it is possible to increase the processing time period of the powder without increasing the size of the processing container. As a result, the size of the powder processing apparatus can be reduced.

(6) The plurality of height limitation members may be provided at equal intervals. In this case, the height of the powder moving on the first transport path and the second transport path are limited by the plurality of height limitation members. Thus, the powder can be evenly processed by the processing gas over a long period of time. Further, the plurality of height limitation members are provided at equal intervals. Thus, the localization of the powder is more resolved. As a result, the powder can be more evenly processed by the processing gas.

(7) The contact surface with the powder in the strip-shaped transporter may be made of metal. In this case, heat of the powder can be radiated through the contact surface with the powder in the strip-shaped transporter. Thus, the powder can be more evenly processed.

(8) The processing container may have a gas inlet for introduction of the processing gas and a gas outlet for discharge of the processing gas.

In this case, the processing gas can be successively introduced into the powder processing apparatus, and the processing gas can be successively discharged. Thus, the concentration of the processing gas in the processing container during the process using the processing gas can be kept substantially constant. As a result, the powder can be more evenly processed.

(9) The processing gas may include a fluorine gas. In this case, the powder is processed by a fluorine gas, whereby fluorine can be added and water repellency can be applied to the surface of the powder. Further, when the processing gas that includes an oxygen gas and a fluorine gas is used, a terminal group of the molecular on the surface of the powder becomes -CF=O due to an oxygen gas and a fluorine gas and then becomes a hydrophilic group such as a carboxyl group by being hydrolyzed. As a result, the hydrophilicity of the powder is improved.

### [6] Correspondences between Constituent Elements in Comprehensive Concept of Reference Configuration and Parts in Reference Configurations

In the following paragraphs, non-limiting examples of correspondences between various elements recited in comprehensive concept below and those described above with respect to various reference configurations are explained.

The powder processing apparatus 100 is an example of a powder processing apparatus, the processing container 10 is an example of a processing container, the ascending transport path 60 and the descending transport path 70 are examples of a powder transport path, the ascending transport path 60 is an example of a first transport path and the descending transport path 70 is an example of a second transport path. The gas inlet port 1 is an example of a gas inlet, the gas outlet port 2 is an example of a gas outlet, the powder supply port 3 is an example of a powder supplier, the powder recovery port 4 is an example of powder recoverer and the vibration motor 40 is an example of a vibration applier.

The height limitation member 64 is an example of a height limitation member, and the lower end 64c is an example of a lower end. The strip-shaped transport element 61 is an example of a strip-shaped transporter, or the first and second strip-shaped transporters. The upper surface 61a is an example of a contact surface, and the clearance S is an example of a clearance.

As each of various elements recited in Comprehensive Concept, various other elements having configurations or functions described in Comprehensive Concept can be also used.

The present reference configuration can be effectively utilized for the process of the powder using various processing gases.

### [7] Summary of Reference Configuration

The ascending transport path extends spirally in a vertical direction in the processing container. The ascending transport path has a strip-shaped transport element for movement of the powder. The powder is supplied to the ascending transport path by the powder supply port. The ascending transport path is vibrated by the vibration motor, so that the powder supplied to the ascending transport path moves along the ascending transport path. The height of the powder moving in the ascending transport path is limited by the height limitation member, and the powder is stirred. In the processing container, the powder supplied to the ascending transport path is processed by the processing gas while moving. The processed powder is recovered from the powder recovery port.

### [Industrial Applicability]

The present invention can be utilized for processing powder.

This application is a divisional application of European patent application no. 12 827 390.1 (the "parent application"), also published under no. EP-A- 2 752 235. The following items corresponding to the originally filed claims of the parent application form part of the content of this description as filed.

### ITEMS

1. A powder stirring device that processes powder using a reactive processing gas, comprising:
   a reaction container that has a rotationally symmetric inner peripheral surface with respect to an axis in a substantially horizontal direction, is rotatably provided around the axis, and is configured to be capable of storing the powder;
   a rotation driver that rotates the reaction container around the axis;
   a gas introduction system for introducing the processing gas into the reaction container rotated by the rotation driver; and
   a gas discharge system for discharging the processing gas in the reaction container rotated by the rotation driver.
2. The powder stirring device according to item 1, further comprising a projection provided to project from the inner peripheral surface of the reaction container.
3. The powder stirring device according to item 2, wherein
   the projection includes a plurality of plate members that extend in parallel with the axis and are arranged toward a rotational center.
4. The powder stirring device according to item 1, wherein
   the gas discharge system includes a gas outlet pipe that is inserted into the reaction container from an outside of the reaction container and has a discharge port that opens upward inside of the reaction container.
5. The powder stirring device according to item 4, wherein
   part of the gas outlet pipe is provided to extend upward,
   the discharge port is provided at an upper end of the part that extends upward, and
   the powder stirring device further comprising a powder flow-in prevention member provided to cover surroundings of and a region above the discharge port of the gas outlet pipe.
6. The powder stirring device according to item 1, further comprising a fixing member provided on the axis, wherein
   the reaction container is provided to be rotatable relative to the fixing member, and
   the gas introduction system and the gas discharge system are provided to penetrate the fixing member.

## Claims

1. A powder processing apparatus that processes powder using a processing gas, comprising:
a powder transport path that has a strip-shaped transporter that extends spirally in a vertical direction and on which the powder moves;
a powder supplier for supplying the powder to the powder transport path;
a vibration applier that vibrates the powder transport path to move the powder supplied to the powder transport path along the strip-shaped transporter;
a processing container in which the powder supplied to the powder transport path is processed by the processing gas while moving;
a powder recoverer that recovers the processed powder; and
at least one height limitation member that limits a height of the powder moving on the strip-shaped transporter.

2. The powder processing apparatus according to claim 1, wherein the height limitation member has a lower end that is opposite to the strip-shaped transporter, and is arranged such that a clearance is formed between the lower end and the strip-shaped transporter.

3. The powder processing apparatus according to claim 1 or 2, wherein a side portion, which is positioned at an inside of a spiral of the strip-shaped transporter, of the height limitation member is located at a further downstream position than a side portion that is positioned at an outside of the spiral regarding a movement direction of the powder.

4. The powder processing apparatus according to any one of claims 1 to 3, wherein a contact surface with the powder in the strip-shaped transporter is inclined such that the inside of the spiral is lower than the outside of the spiral.

5. The powder processing apparatus according to any one of claims 1 to 4, wherein the powder transport path includes:
a first transport path that extends spirally in the vertical direction and has a first strip-shaped transporter for movement of the powder, and
a second transport path that extends spirally in the vertical direction and has a second strip-shaped transporter for movement of the powder,
wherein the first and second strip-shaped transporters are connected to each other at one end, and a direction of turns of the spiral of the second strip-shaped transporter is opposite to a direction of turns of the spiral of the first strip-shaped transporter.

6. The powder processing apparatus according to any one of claims 1 to 5, wherein a plurality of the height limitation members are provided at equal intervals.

7. The powder processing apparatus according to any one of claims 1 to 6, wherein the contact surface with the powder in the strip-shaped transporter is made of metal.

8. The powder processing apparatus according to any one of claims 1 to 7, wherein the processing container has a gas inlet for introduction of the processing gas, and a gas outlet for discharge of the processing gas.

9. The powder processing apparatus according to any one of claims 1 to 8, wherein the processing gas includes a fluorine gas.
